Europäisches Patentamt

European Patent Office

Office européen des brevets

(19)

(11) Veröffentlichungsnummer: **0 135 009**
**A2**

(12) **EUROPÄISCHE PATENTANMELDUNG**

(21) Anmeldenummer: **84108247.2**

(22) Anmeldetag: **13.07.84**

(51) Int. Cl.⁴: **G 06 F 11/26**

(30) Priorität: **12.08.83 US 522927**

(43) Veröffentlichungstag der Anmeldung:
**27.03.85 Patentblatt 85/13**

(84) Benannte Vertragsstaaten:
**AT DE FR GB SE**

(71) Anmelder: **Siemens Aktiengesellschaft**
**Berlin und München Wittelsbacherplatz 2**
**D-8000 München 2(DE)**

(72) Erfinder: **Fasang, Patrick P.**
**6 Bennington drive**
**Lawrenceville, NJ 08648(US)**

(54) Die Erfindung bezieht sich auf eine Anordnung und ein Verfahren zum Prüfen eines Mikroprozessorsystem.

(57) Ein Mikroprozessorsystem wird mit Hilfe einer Prüfanordnung überprüft. Die Prüfanordnung enthält einen Steuermikroprozessor (16), der einen Speicher aufweist, eine Anzeigeeinheit (18) und eine Schnittstellenschaltung, um die Verbindung der Prüfanordnung mit dem zu überprüfenden Mikroprozessorsyste (10, 14) herzustellen. Beim Testverfahren hat der Steuermikroprozessor (16) Zugriff zu den Daten- und Adreßbussen (22, 24). Er führt zunächst einen Selbsttest durch, überprüft die weiteren Elemente der Prüfanordnung und alle dem Hauptmikroprozessor (10) des Mikroprozessorsystems zugeordneten Schaltkreise (14) und übergibt dann die Steuerung wieder dem Hauptmikroprozessor (10), der seinerseits einen Selbsttest ausführt.

./...

Croydon Printing Company Ltd.

FIG. 2

Siemens Aktiengesellschaft    Unser Zeichen **0135009**
Berlin und München           VPA 83 P 7431 E

Die Erfindung bezieht sich auf eine Anordnung und ein Verfahren zum Prüfen eines Mikroprozessorsystems.

Die Anwendbarkeit von Mikroprozessoren wird immer größer. Der Mikroprozessor enthält dabei als wesentliche Komponenten den Controller, den Arbiter und den Sequencer. Seine große Nützlichkeit und Leistung ergibt sich aus seiner Programmierbarkeit, seiner einfachen Anwendbarkeit und Anpassung an verschiedenartigste Einsatzfälle. Der Schaltkreis ist billig im Vergleich und konzentriert große Rechen- und Steuerleistungen auf kleinstem Raum.

Zu den Funktionen eines Mikroprozessorsystems gehört die Verarbeitung von Daten in Form von elektrischen Signalen, die im System über einen Datenbus zu Speicherplätzen übertragen werden, die mit Hilfe von Adreßsignalen ausgewählt werden. Die Verarbeitung erfolgt unter der Steuerung von Befehlen, die über den Datenbus in die Verarbeitungseinheit (CPU) übertragen werden, und dort interpretiert und ausgeführt werden. Statusinformationen für den Mikroprozessor und das System werden über einen Steuerbus übertragen. Das Mikroprozessorsystem umfaßt eine Mehrheit von Komponenten, wie z.B. Mikroprozessoreinheiten, Speicher und zwar Festspeicher (ROM) oder Direktzugriffsspeicher (RAM), Eingangs/Ausgangs(I/O)=Datentransferregister, Taktschaltungen und Bustreiber usw.. Die Tätigkeit des Mikroprozessors endet in Ergebnissen, die z.B. die Antwort auf einen mathematischen Algorithmus sein können und die zum Benutzer z.B. über einen Drucker, einen Bildschirm übertragen werden können. Weiterhin können die Ausgangssignale elektrische Signale sein, durch die Anordnungen, wie ein Telefon, ein Spielzeug oder ähnliche Anordnungen, gesteuert werden.

Il 1 The 29. Mai 1984

Zur Überprüfung eines solchen Mikroprozessorsystems und zwar in der Systemumgebung ist es erforderlich, daß das System durch eine Folge von Testbefehlen hindurchläuft und daß die Operationen die entsprechend den Befehlen ausgeführt werden, richtig durchgeführt worden sind. Zu diesem Zwecke werden oft externe Schaltungen verwendet, um Testsignale für ein zu prüfendes System zu erzeugen. Die externen Schaltungen umfassen dann auch Meßschaltungen und Anzeigeschaltungen, um die Fehlerfreiheit des zu prüfenden Systems anzuzeigen. In einem typischen Verfahren gibt ein Operator über Tasten Informationen in die externen Schaltungen ein, um eine vorgegebene Folge von Prüfsignalen zu erzeugen, die dann dem zu überprüfenden System zugeführt werden. Die Antwortsignale des Systems auf diese Prüfsignale werden mit Hilfe der externen Schaltungen abgenommen und die Ergebnisse mit den erwarteten Werten verglichen.

Das oben beschriebene Prüfverfahren, das externe Testeinrichtungen verwendet, hat viele Nachteile. Zur Durchführung des Testverfahrens ist ein Operator notwendig, der die erforderliche Testausrüstung zur Verfügung haben muß. Die Testausrüstung muß nahe zum prüfenden System gebracht werden und die verschiedenen Komponenten der Testausrüstung müssen miteinander und mit dem zu prüfenden System verbunden werden. Weiterhin ist zur Durchführung des Tests ein großes know-how erforderlich; z.B. muß der Operator mit der Testausrüstung vertraut sein und muß die Testergebnisse bewerten können. Außerdem sind ausführliche Beschreibungen des Testverfahrens erforderlich. Weitere Nachteile liegen vor, wenn ein zu prüfendes Mikroprozessorsystem an entfernten Orten installiert ist, an denen die Testausrüstung nicht verfügbar ist oder auf den Mikroprozessor nicht zugegriffen werden kann. Selbst bei vorhandener Testausrüstung können spezielle Tests für besondere Mikroprozessorsysteme oft nicht durchgeführt werden.    Schließlich ist die Datenübertragung zwischen den Komponenten des Mikroprozessorsystems sehr schnell. Dagegen ist die Übertragung der Informationen über die Schnittstelle zwischen der externen Testausrüstung und dem Mikroprozessorsystem verhältnismäßig langsam. Aus diesem Grunde müssen bei einer externen Testausrüstung die einzelnen Tests wiederholt werden oder die Operationen wiederholt ausgeführt werden, um den Zustand des Systems überprüfen zu können. Weiterhin wird bei den meisten externen Testausrüstungen das Testergebnis vom Mikroprozessorsystem in serieller Form zur Testausrüstung übertragen und damit die Überprüfung der parallen Übertragung der Informationen innerhalb des Systems erschwert.    Da zudem die Übertragung von Informationen innerhalb des Systems extrem schnell sein kann, gibt es einige Tests, die nur sehr schwierig unter Verwendung von externer Testausrüstung ausgeführt werden könnten, weil die Übertragung der Information über die Schnittstelle zu langsam ist.

Es sind Softwaretestverfahren für Mikroprozessorsysteme entwickelt worden, durch die der Mikroprozessor die Genauigkeit der Informationsübertragungswege überprüfen kann. Solche Tests umfassen Paritätsprüfungen, die aber nur begrenzt einsetzbar sind. Damit kann die Richtigkeit von funktionellen Operationen des gesamten Systems bei der Verarbeitung von aktuellen Daten nur unvollkommen überprüft werden.

Eine Selbstprüftechnik, um die Arbeitsweise von logischen Schaltkreisen zu prüfen, ist von Könemann, "Built-In Logic Block Observation Techniques", Proc. 1979 IEEE Test Conference, Cherry Hill, N.J., IEEE, New York, N.Y. Session 2, S. 37-41 vorgeschlagen worden. Das vorgeschlagene Verfahren verwendet einen Schaltkreis, der "built-in logic block observer" oder "BILBO" genannt wird. Der BILBO besteht aus einer Reihe von Flip-Flop Schaltungen, die zum schrittweisen Betrieb hintereinander angeordnet sind und die weiterhin direkte Eingänge aufweisen, so daß der Ausgangszustand des BILBO von gegenwärtigen und von früheren Eingangssignalen abhängt. Der Ausgang eines BILBO ist an einen Dateneingang eines digitalen logischen Schaltkreises angeschlossen und der Ausgang des digitalen logischen Schaltkreises ist mit dem Eingang eines zweiten BILBO verbunden. Die Ausgangssignale des ersten BILBO werden somit dem logischen Schaltkreis zugeführt. Jedes Ausgangssignal des logischen Schaltkreises wird einem Eingang des zweiten BILBO zugeführt, dessen Zustand die Antwort des logischen Schaltkreises auf jedes Eingangssignal vom ersten BILBO darstellt. Am Schluß des Prüfverfahrens liegt am Ausgang des zweiten BILBO also ein Zustand vor, der von dem letzten Eingangssignal und allen vorhergehenden Eingangssignalen des zweiten BILBO abhängt. Somit wird eine einzigartige Ausgangssignatur erzeugt, die charakteristisch . ist für die aufeinanderfolgenden Antworten des logischen Schaltkreises auf die gesamte Testfolge. Diese Ausgangssignatur kann dann am Ende der Testfolge mit einer vorgegebenen Testsignatur verglichen werden, um die Fehlerfreiheit des digitalen logischen Schaltkreises festzustellen. Die Koinzidenz oder Verschiedenheit der Ausgangstestsignatur mit der vorgegebenen Testsignatur legt fest, ob der Schaltkreis richtig arbeitet oder nicht.

Der von Könemann vorgeschlagene Testschaltkreis soll auf demselben integrierten Schaltkreisbaustein wie der Mikroprozessor oder andere Komponenten des Mikroprozessors angeordnet sein. Das Steuersignal zur Erzeugung der Testsignale muß jedoch von außerhalb dem Baustein zugeführt werden und der zweite BILBOausgang muß gelesen und außerhalb des Bausteins verarbeitet werden, um die Testergebnisse zu bewerten. Da weiterhin der BILBO nach Könemann keine Adressen oder Steuerinformationen dem zu prüfenden Schaltkreis anbietet, ist er zur Überprüfung der Funktionen eines ganzen Mikroprozessorsystems nicht geeignet. Die Überprüfung der Funktionen eines ganzen Mikroprozessorsystems erfordert Befehle, die Erzeugung von Adressen und Testdaten und die Überprüfung von Signalen, die im gesamten System entstehen. Durch die Könemannschaltung wird dies nicht erreicht.

Die der Erfindung zugrundeliegende Aufgabe besteht darin, eine eingebaute Anordnung und ein Verfahren zum Prüfen der Funktionen eines Mikroprozessorsystems anzugeben. Die Anordnung soll dabei fähig sein, sich selbst zu überprüfen und fehlerhafte Teile des Mikroprozessorsystems festzustellen und zu isolieren. Diese Anordnung wird im folgenden Prüfanordnung genannt.

Die Aufgabe wird bei einer Prüfanordnung zum Prüfen eines Mikroprozessorsystems mit einem Hauptmikroprozessor und einem zugeordneten Hauptspeicher dadurch gelöst, daß ein Steuermikroprozessor mit einem Speicher vorgesehen ist, daß eine Anzeigeeinheit vorgesehen ist, durch die die Feststellung von Fehlern und die Art dieser Fehler innerhalb des Hauptmikroprozessors, des Hauptspeichers und der Prüfanordnung angezeigt wird, und daß eine Schnittstellenschaltung zur Herstellung einer Verbindung zwischen dem Steuermikroprozessor und den zu prüfenden Schaltkreisen vorgesehen ist, so daß der Steuermikroprozessor Testfolgen zu den übrigen Teilen der Prüfanordnung, zu dem Hauptmikroprozessor und zu dem Hauptspeicher zu deren Überprüfung übertragen kann.

Das Verfahren zum Prüfen des Hauptmikroprozessors und eines zugeordneten Hauptspeichers mit Hilfe einer eingebauten Prüfanordnung, die zumindest einen Steuermikroprozessor, eine Anzeigeeinheit und eine Schnittstellenschaltung enthält, besteht darin, daß der Steuermikroprozessor
zunächst sich selbst überprüft, daß dann der Hauptspeicher,
die Anzeigeeinheit und die Schnittstellenschaltung dadurch
überprüft wird, daß ihnen Testfolgen gesteuert vom Steuermikroprozessor zugeführt werden, und daß schließlich der
Hauptmikroprozessor einen Selbsttest ausführt und dabei
ein Prüfprogramm ausführt, das im Hauptspeicher gespeichert
ist.

Die Prüfanordnung umfaßt einen Steuermikroprozessor, der
mit seinem eigenen Speicher zusammenarbeitet, eine Anzeigeeinheit, durch die einem Operator Informationen über den
Fortgang der Prüfung oder Daten zum Identifizieren von fehlerhaften Schaltkreisen angezeigt wird und eine Schnittstellenschaltung, über die der Prüfanordnung Zugriff zu dem
Speicher des Mikroprozessorsystems und zur Steuerung des
Hauptmikroprozessors selbst gegeben wird.

Es ist vorteilhaft, wenn die Prüfanordnung einen Rückstellschalter enthält. Der Rückstellschalter startet die Prüfanordnung. Er kann jederzeit betätigt werden, wenn die funktionelle Unversehrtheit des Mikroprozessorsystems überprüft
werden soll.

Es ist zweckmäßig, wenn der zusätzliche Speicher, der die
Befehle für den Steuermikroprozessor enthält, zusammen mit
dem Steuermikroprozessor in einem Baustein realisiert ist.
Ein solcher Baustein, der den Mikroprozessor, den Speicher
und Ein/Ausgabeschaltungen enthält, stellt dann einen
Mikrocomputer auf einem Chip dar.

Um Kosten zu sparen ist es vorteilhaft, die Anzahl der
Bits pro Datenwort im Steuermikroprozessor kleiner zu wählen als im Hauptmikroprozessor des Mikroprozessorsystems.
Die Verringerung der Kosten wird erreicht, ohne daß die
Testzeit wesentlich erhöht wird oder die Testeigenschaften
verringert werden.

In einer Ausbildung des erfindungsgemäßen Verfahrens wird
zur Überprüfung des Hauptspeichers ein Signaturregister
verwendet. Im Signaturregister wird ein digitales Datenwort gebildet, das abhängig von einer Folge von zugeführten Datenwörtern ist. Dieses Datenwort im Signaturregister
wird Signatur genannt. Die Überprüfung des Hauptspeichers
erfolgt dadurch, daß der Inhalt des Hauptspeichers zu dem
Signaturregister übertragen wird und die dadurch erzeugte
Signatur mit einer bekannten Sollsignatur verglichen wird.

Andere Weiterbildungen und Vorteile der Erfindung ergeben
sich aus den Unteransprüchen.

Anhand eines Ausführungsbeispiels, das in den Figuren dargestellt ist, wird die Erfindung weiter erläutert. Es
zeigen
    Fig. 1 ein Blockschaltbild der Prüfanordnung und des zu
           prüfenden Mikroprozessorsystems,
    Fig. 2 eine ausführlichere Darstellung der Prüfanordnung
           und des Mikroprozessorsystems,
    Fig. 3 eine Darstellung des Hauptspeichers,
    Fig. 4 eine Darstellung des Signaturregisters,
    Fig. 5 ein Flußdiagramm, das den Ablauf der Prüfung des
           Mikroprozessorsystems zeigt.

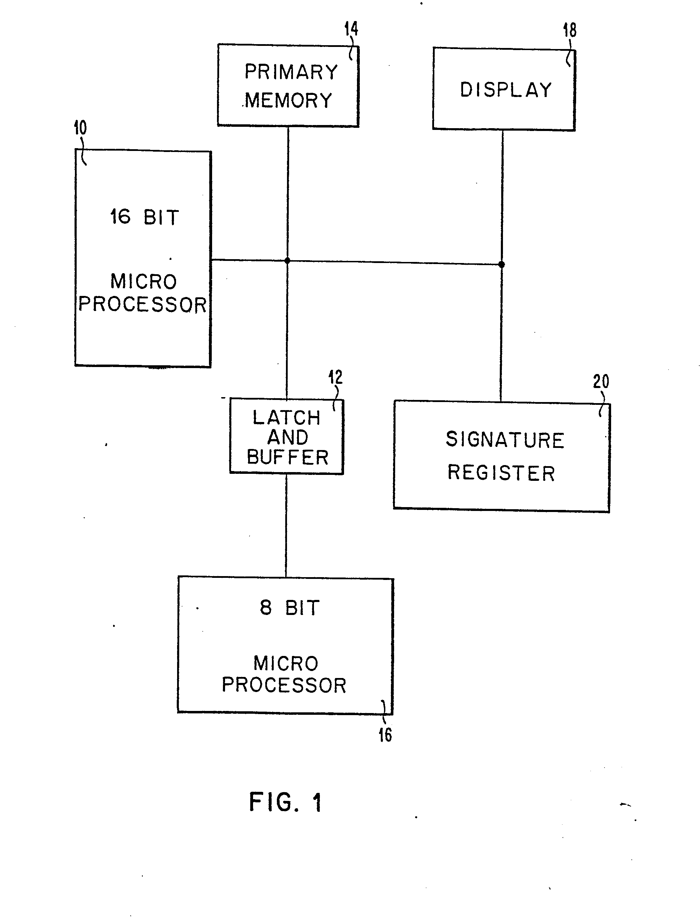

Fig. 1 zeigt ein Blockschaltbild eines Hauptmikroprozessors,
seines Hauptspeichers und der eingebauten Prüfanordnung.
Dabei ist der Hauptmikroprozessor mit 10 und der Hauptspeicher mit 14 bezeichnet. Ein Steuermikroprozessor 16,

ein Adressenregister 12, eine Anzeigeeinheit 18 und ein Signaturregister 20 bilden die eingebaute Prüfanordnung.

Selbstverständlich umfaßt ein Mikroprozessorsystem nicht nur einen Mikroprozessor und einen zugeordneten Speicher. Hinzu kommen noch Steuerschaltungen und Ein/Ausgangsschaltungen. Diese Schaltungen, die nicht dargestellt sind, können ebenfalls mit Hilfe der Prüfanordnung überprüft werden.

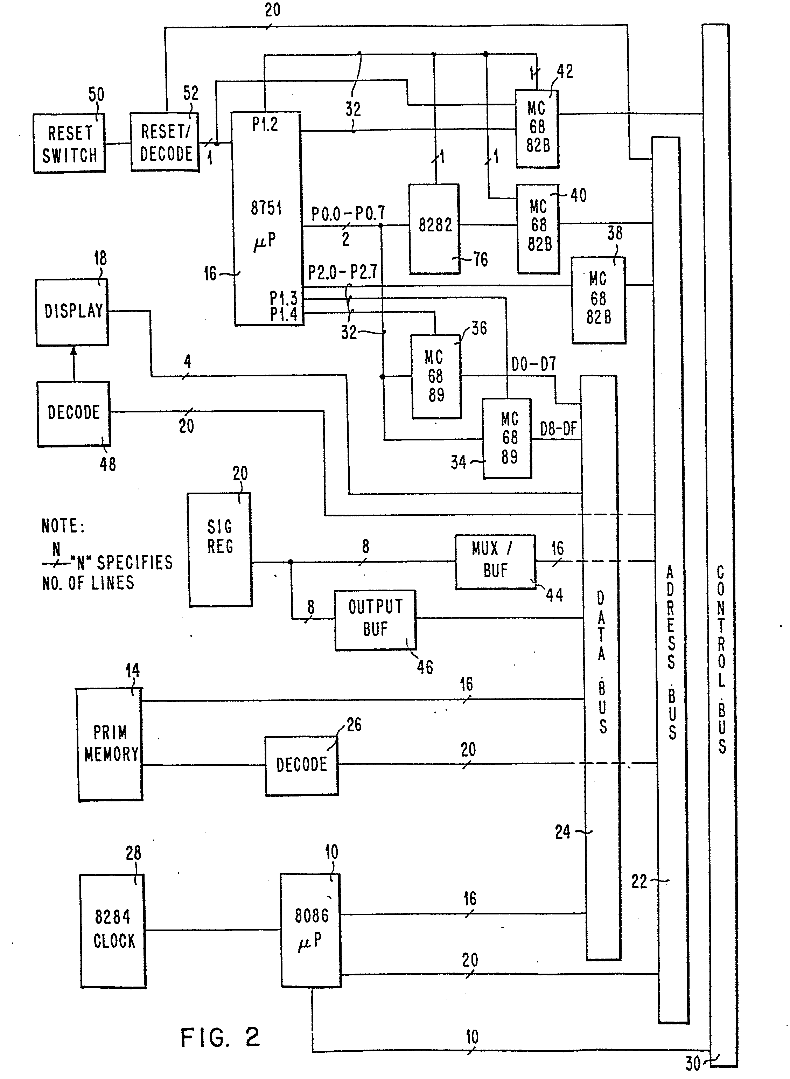

Eine genauere Darstellung der Prüfanordnung und des Mikroprozessorsystems, das überprüft werden soll, ergibt sich aus Fig. 2. Der Hauptmikroprozessor 10 hat eine Breite von 16 bit und kann z.B. ein Intel 8086 Mikroprozessor sein. Der Hauptspeicher 14 enthält die Befehlsworte des Betriebssystems für den Hauptmikroprozessor 10 und zusätzlich Daten, Konstanten und Testbefehle. Der Hauptspeicher 14 arbeitet mit dem Hauptmikroprozessor 10 zusammen und hat ebenfalls eine Datenbreite von 16 bit. Im Betrieb erhält der Hauptspeicher 14 Signale über den Adressenbus 22. Die Signale des Adressenbus 22 werden durch einen Decoder 26 decodiert und dann dem Hauptspeicher 14 zugeführt, der daraufhin Daten auf einen Datenbus 24 gibt. Diese Daten können dem Hauptmikroprozessor 10 zugeführt werden. Der Hauptmikroprozessor 10 analysiert diese Daten und führt die zugeordneten Aufgaben aus.

Ein Taktschaltkreis 28 erzeugt die Taktsignale für den Hauptmikroprozessor 10, um den Hauptmikroprozessor 10 zur Ausführung seines Programms zu veranlassen. Um die funktionelle Fehlerfreiheit des Mikroprozessorsystems, bestehend aus dem Hauptmikroprozessor 10, dem Hauptspeicher 14 und von peripheren Schaltungen (nicht dargestellt), zu überprüfen, lädt der Steuermikroprozessor 16 eine Testfolge und steuert die Anfangsschritte des Prüfverfahrens. Die Anzeigeeinheit 18 zeigt die Testergebnisse einem Operator. Sichtbare Symbole oder andere Anzeigen werden dazu verwendet, um Fehler und deren Entstehungsort innerhalb des Mikroprozessorsystems oder der Prüfanordnung selbst anzuzeigen. Durch das Signaturregister 20 wird der Hauptspeicher 14 oder in dynamischer Weise der Datenfluß innerhalb des Systems überprüft.

Der Steuermikroprozessor 16 enthält einen unabhängigen PROM oder ROM und ein RAM (Direktzugriffsspeicher) und zusätzlich Eingabe/Ausgabeleitungen, die mit 32 bezeichnet sind. Man kann den Schaltkreis 16 als einen integrierten Mikrocomputer bezeichnen. Über die Eingabe/Ausgabeleitungen 32 ist der Steuermikroprozessor 16 mit dem Adressenbus 22, dem Datenbus 24 und dem Steuerbus 30 des Systems verbunden. Ein Pufferspeicher 34 für die höherwertigen Datenbits und ein Pufferspeicher 36 für die niederwertigeren Datenbits verbindet oder trennt die Eingabe/Ausgabeleitungen 32 des Steuermikroprozessors 16 mit/von dem Datenbus 24 des Systems. Ein Pufferspeicher 38 für die höherwertigeren Adreßbits und ein Pufferspeicher 40 für die niederwertigeren Adreßbits verbindet oder trennt die Eingabe/Ausgabeleitungen 32 des Steuermikroprozessors 16 mit/von dem Adreßbus 22 des Systems. Ein Pufferspeicher 42 stellt die Verbindung zwischen dem Steuermikroprozessor 16 und dem Steuerbus 30 her.

Das Signaturregister 20 ist ein 8 bit Schaltkreis und ist über einen Multiplexer 44 mit dem Datenbus 24 des Systems verbunden. Im Betrieb wählt der Multiplexer 44 entweder ein niederwertigeres oder höherwertigeres Byte (ein Byte stellt eine Hälfte eines Datenwortes oder 8 bit dar) vom Datenbus 24 und überträgt es zum Signaturregister zur Verarbeitung. Auf die verarbeiteten Daten, die im Signaturregister entwickelt werden, kann durch den Steuermikroprozessor 16 oder den Hauptmikroprozessor 10 über den Pufferspeicher 46 für das Signaturregister und über den Datenbus 24 zugegriffen werden.

Die Daten, die durch die Anzeigeeinheit 18 dargestellt werden sollen, werden über den Datenbus 24 übertragen. Die Anzeigedaten werden in ein Register, das in der Anzeigeeinheit 18 angeordnet ist, durch Signale eingetaktet, die von einem Anzeigedecoder 48 geliefert werden. Der Anzeigedecoder 48 erhält dazu Signale vom Adreßbus 22. Wenn auf dem Adreßbus 22 eine bestimmte Adresse übertragen wird, überträgt der Decoder 48 neue Daten in das Register oder bringt die Anzeigeeinheit auf den neuesten Stand.

Ein Rücksetzschalter 50 ist eine Schaltung, die vom Operator betätigt wird und die dann einen Decoderschaltkreis 52 ansteuert, um ein Rücksetzsignal für den Steuermikroprozessor 16 zu erzeugen. In einem Ausführungsbeispiel kann der Decoderschaltkreis 52 einen Rücksetzschaltkreis enthalten, der das Auftreten einer Leistungsunterbrechung oder eine Leistungseinschaltung abtastet und den Decoderschaltkreis 52 dazu veranlaßt, ein Rücksetzsignal zu erzeugen. Der Decoderschaltkreis 52 ist ebenfalls mit dem Adreßbus 22 verbunden. Wenn eine vorgegebene Adresse auftritt, dann wird ein Rücksetzsignal erzeugt.

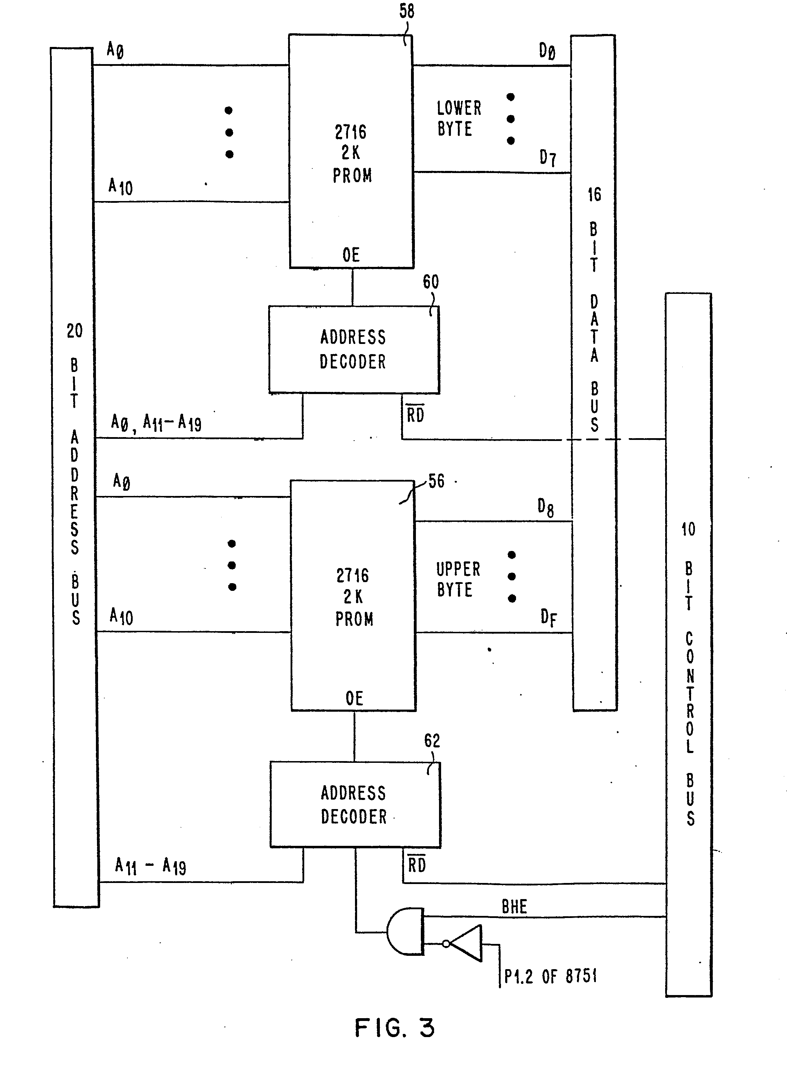

Der Hauptspeicher 14, ist mit dem Datenbus 24 über 16 Datenleitungen verbunden. Ein Speicherdecoder 26 dient dazu, um Adreßsignale zum Hauptspeicher 14 zu übertragen und eine ausgewählte Anzahl von Adressenleitungen zu decodieren, um festzustellen, wann eine Verbindung zum oder vom Hauptspeicher gewünscht wird. Figur 3 zeigt eine Ausführung des Hauptspeichers, bei der der Hauptspeicher 14 aus zwei Speichereinheiten 56 und 58 besteht. Ein Adreßdecoder 60 für die geraden Adressen und ein Adreßdecoder 62 für die ungeraden Adressen dienen dazu, um die eine oder die andere
der zwei Speichereinheiten 56 und 58 anzusteuern, wenn
ein Steuersignal vom Steuermikroprozessor 16 auftritt.

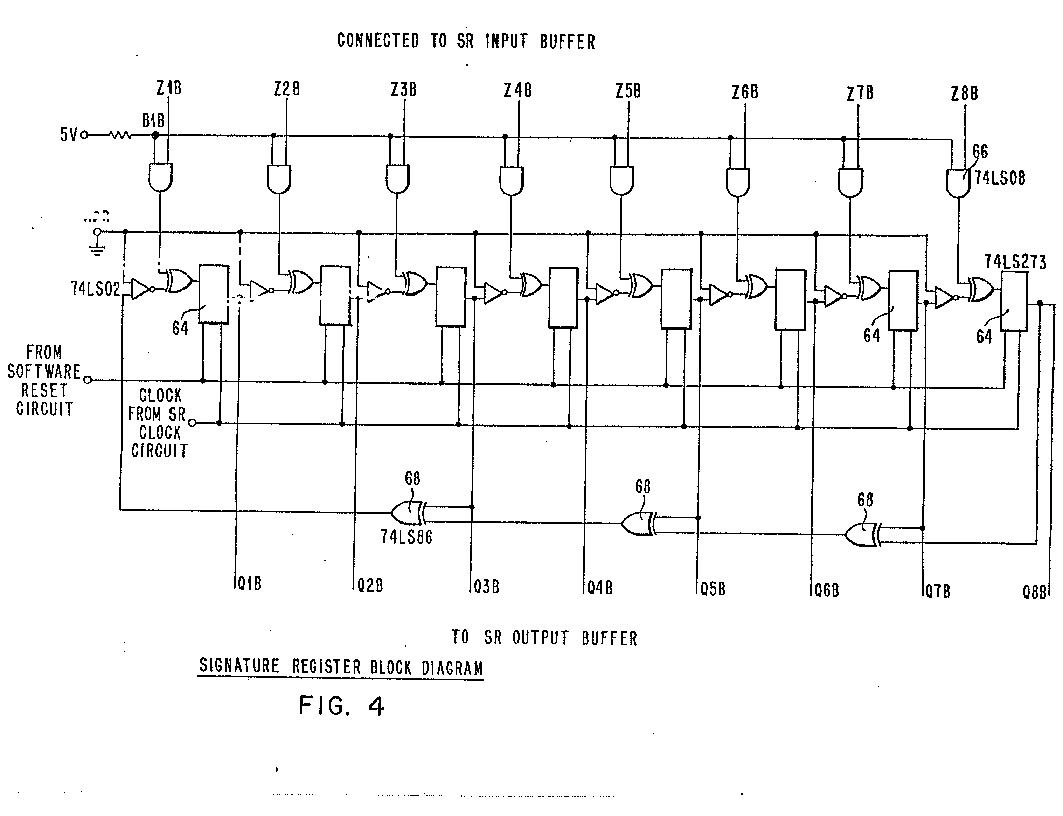

Figur 4 zeigt ein Ausführungsbeispiel für ein Signaturregister 20. Das Signaturregister erzeugt ein Ausgangssignal oder Datenwort, das von einer Folge    dem Signaturregister angebotenen Daten abhängt. Ein Datenwort wird an
den Eingängen des Signaturregisters angelegt, gefolgt von
einem Taktimpuls. In Abhängigkeit davon entwickelt das
Signaturregister ein Ausgangssignal, welches eine Funktion
des vorhergehenden Ausgangszustandes des Signaturregisters
und der anliegenden Eingangsinformation ist. Anschließend
wird ein anderes Datenwort an die Eingänge des Signaturregisters angelegt und ein weiterer Taktimpuls zugeführt.
Der neue Ausgangszustand des Signaturregisters ist nunmehr
eine Funktion des vorhergehenden Ausgangszustandes und des
an den Eingängen des Signaturregisters anliegenden Datenwortes. Auf diese Weise wird eine "Geschichte" der Daten
in ihrer zugeführten Folge entwickelt. Das Signaturregister erzeugt aus der vollständigen Folge von zugeführten
Datenworte am Ausgang die "Signatur", die überprüft wird.

In Figur 4 sind die Eingangsanschlüsse des Signaturregisters mit den Buchstaben Z1B bis Z8B, die Ausgangsanschlüsse
mit Q1B bis Q8B und der Takteingang mit SR bezeichnet.

Wesentlich ist, daß die Prüfanordnung das Testverfahren
startet. Dies geschieht dann, wenn das Mikroprozessorsystem
eingeschaltet wird oder wenn der Rücksetzschalter 50 betätigt wird. Der Rücksetzschalter 50 startet somit den
Prüfvorgang. Das nun folgende Prüfverfahren im einzelnen
wird weiter unten erläutert.

Der Steuermikroprozessor 16 kann ein   8751 Mikrocomputer
mit Eingabe/Ausgabeleitungen sein, die mit der Vorsilbe
"p" bezeichnet sind. Der 8751 Mikrocomputer hat eine Breite
von 8 bit und arbeitet mit einem Datenbus 24 zusammen, der
eine Datenbreite von 16 bit hat. Um dies zu ermöglichen,
ist zwischen dem Datenbus 24 und den Eingangs/Ausgangslei-
tungen P0.0 bis P0.7 des Steuerprozessors 16 der Pufferspeicher 34 für die höherwertigeren Datenbites und der
Pufferspeicher 36 für die niederwertigeren Datenbites angeordnet. Im vorliegenden Ausführungsbeispiel sind die Datenpuffer 34 und 36 als MC 6889 tri-state, 4 bit Parallelbus
Transceiver realisiert. Die Bustransceiver enthalten Steuereingänge, um die Richtung des Datenflusses festzulegen und
um den Tristatezustand einzustellen. Eingabe/Ausgabeleitungen P1.3 und P1.4 stellen die entsprechenden Steuerleitungen dar. Auf diese Weise überträgt der Steuermikroprozessor Daten zum Datenbus oder liest Daten, und zwar entweder ein niederwertigeres oder höherwertigeres Byte von

Das Signaturregister 20, das in Figur 4 ausführlicher dargestellt ist, besteht aus einem Octalregister (74LS273) 64,
74LS08 UND Gliedern (ein typisches UND Glied ist mit 66 bezeichnet) und Rückkopplungsschaltkreisen 68, die als 74LS86
Exklusiv-ODER Glieder realisiert sind. Das Signaturregister
20 ist ebenfalls eine 8 bit breite Schaltung, die an den
16 bit breiten Datenbus 24 angeschlossen werden muß. Dazu
wird ein Multiplexer/Puffer 44 und ein Signaturregister-
Ausgangspuffer 46 verwendet, die die Schnittstelle zu dem
Datenbus 24 bilden.

Die Folge dieses Aufbaus ist, daß eine wirksame Prüfanordnung ohne ein
erkennbares Ansteigen der Gesamttestzeit entsteht, obwohl
eine 8 bit breite Prüfanordnung verwendet wird, um ein
16 bit breites Mikroprozessorsystem zu prüfen.

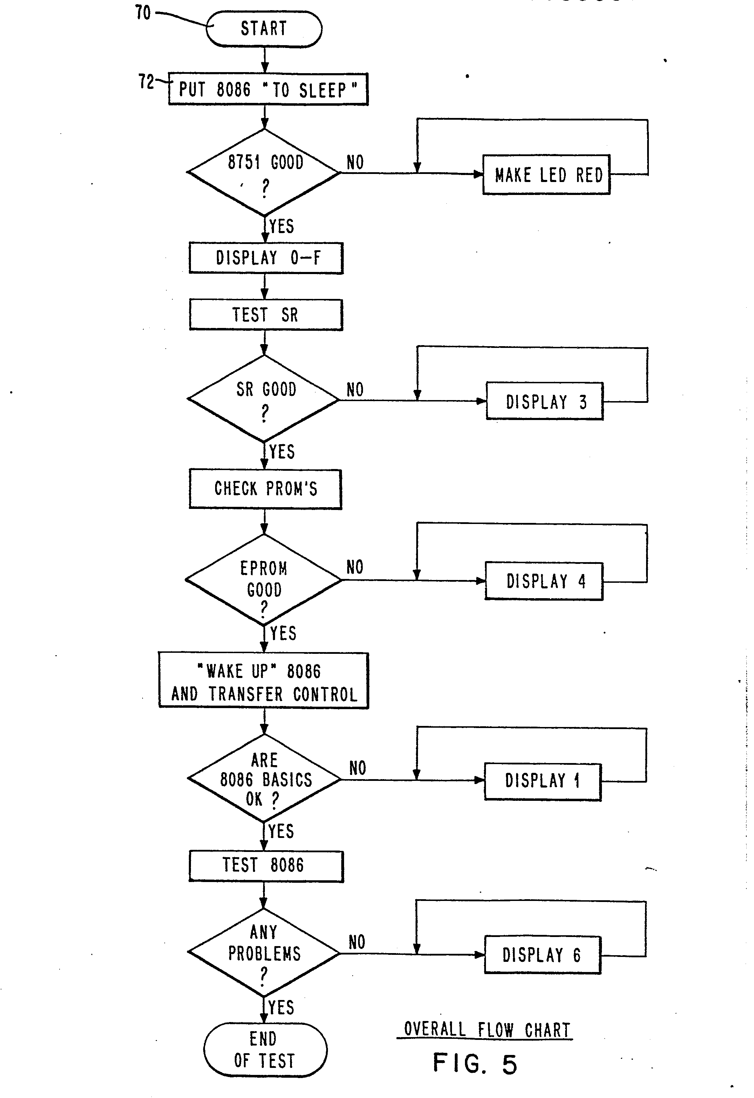

Nach Figur 5 beginnt der Testvorgang, wenn die Leistung eingeschaltet wird oder wenn der Operator den Rücksetzschalter betätigt; dies ist in Figur 5 durch das Wort "Start" dargestellt. Daraufhin wird der Steuermikroprozessor 16 zurückgesetzt und beginnt sein Programm auszuführen, wobei er an einer vorgegebenen Stelle in seinem internen Speicher beginnt. Der 8751 Steuermikroprozessor erzeugt daraufhin ein Steuersignal über den Steuerbus 30, durch das der Hauptmikroprozessor 10, der ein 8086 Mikroprozessor sein kann, veranlaßt wird, in den Wartezustand überzugehen. Dies in Figur 5 durch den Block 72 dargestellt. Im Wartezustand bringt sich der 8086 Mikroprozessor in den Tristatezustand und ist damit mit dem Datenbus 24 und dem Adreßbus 22 nicht mehr in Verbindung. Der 8751 Steuermikroprozessor 16 führt entsprechend dem Flußdiagramm der Figur 5 nunmehr einen Selbsttest durch. Das Selbsttestprogramm besteht aus einigen Programmschritten, nach denen der Steuermikroprozessor einige einfache arithmetische Operationen durchführt, deren richtige Lösungen bekannt sind. Die Ergebnisse dieser arithmetischen Operationen werden mit den bekannten richtigen Werten verglichen und bei Auftreten eines Fehlers wird an der Anzeigeeinheit 18 ein Signal angezeigt, z.B. über eine lichtemittierende Diode.

Wenn der Selbsttest erfolgreich ist, fährt der 8751 Steuermikroprozessor damit fort, die Anzeigeeinheit zu überprüfen. Die Anzeigeeinheit kann z.B. aus einer Hewlett-Packard 5082-7340 bestehen. Diese Anzeigeeinheit kann gelöscht sein oder die hexadezimalen Zeichen 0 bis 9 und A bis F anzeigen. Der vollständige Zeichensatz wird aufeinanderfolgend unter  Steuerung des Programms angezeigt und dem Operator auf diese Weise das Funktionieren der Einheit dargestellt.

Der  Zweck       dieses Testverfahrens besteht darin,
alle Schaltkreise, die für den Hauptmikroprozessor 10
Peripherie sind, zu überprüfen, um fehlerhafte Schaltkreise oder Komponenten isolieren und identifizieren zu
können. Am Schluß überprüft der Steuermikroprozessor 16
das Signaturregister 20 mit bekannten Datenwörtern.

Zu Beginn lädt der Steuermikroprozessor das Signaturregister mit einem vorgegebenen  Datenmuster. Das Programm
läuft weiter und veranlaßt das Lesen des Inhalts des Signaturregisters.Damit wird die Ladbarkeit des Signaturregisters getestet. Anschließend wird das Signaturregister wieder mit einem vorgegebenen  Datenmuster geladen und an den
Takteingang des Signaturregisters ein Taktsignal angelegt.
Dieses Taktsignal wird durch Decodierung einer vorgegebenen
Adresse auf dem Adreßbus erzeugt, und zwar jedesmal, wenn
diese Adresse auf dem Adreßbus auftritt. Dieser Test wird
wiederholt, um zu überprüfen, ob komplementäre Daten in das
Signaturregister geladen werden. Auf diese Weise überprüft
der Steuermikroprozessor 16,daß keine der Signalleitungen
der Signaturregister-hardware auf einer logische 0 oder
einer logischen 1 festgehalten wird. Die Prüfung des Signaturregisters wird damit beendet, daß dieses zurückgesetzt
wird und 255 mal mit einem vorgegebenen Datenmuster, das
an den Dateneingängen zugeführt wird, getaktet wird. Wenn
das Signaturregister am Ende einen vorgegebenen Wert enthält, dann kann daraus geschlossen werden, daß das Signaturregister eine "Signatur" erzeugen kann oder aus einem
geordneten Strom von Daten eine Datenreduktion durchführen
kann. Sollte der Steuermikroprozessor 16 ein unerwartetes
Ergebnis feststellen, wird der Test beendet und die Anzeigeeinheit wird das Zeichen "3" anzeigen, um ein fehlerhaftes Signaturregister zu melden.

Das überprüfte Signaturregister, das in Figur 5 mit SR bezeichnet ist, wird nun dazu verwendet, um den Hauptspeicher 14, der die Befehle und Konstanten für den 8086 Hauptmikroprozessor 10 enthält, zu testen. Dabei wird der 16 bit Hauptspeicher mit Hilfe des 8 bit Steuermikroprozessors 16 und Signaturregisters 20 geprüft. Das Signaturregister SR wird gestartet und die Pufferspeicher 34 und 36 werden so gesteuert, daß das niederwertigere Byte jedes Datenwortes von dem Steuermikroprozessor 16 gelesen wird. Während der Prüfung liest der Steuermikroprozessor 16 nacheinander jeweils ein niederwertigeres Byte aus dem Hauptspeicher 14 und übergibt es dann dem Signaturregister SR. Wenn das letzte niederwertigere Byte zum Signaturregister SR übertragen worden ist, wird der Inhalt des Signaturregisters vom Steuermikroprozessor gelesen und mit dem letzten Datenwort verglichen, das er vom Hauptspeicher 14 erhalten hat. Eine Ungleichheit dieses Vergleiches gibt einen Fehler an und an der Anzeigeeinheit 18 erscheint ein Symbol "4". Zusätzlich wird die letzte Speicherstelle des Hauptspeichers 14 für den Signaturwert des Speichers reserviert. Die Prüfung des Hauptspeichers wird dadurch fortgesetzt, daß die beschriebenen Testfolgen wiederholt werden und die Pufferspeicher 34 und 36 so eingestellt werden, daß zu den höherwertigeren Bytes im Hauptspeicher 14 zugegriffen wird.

Zu diesem Zeitpunkt sind alle Komponenten um den 8086 Hauptmikroprozessor 10 überprüft worden. Darum übergibt der Steuermikroprozessor 16 nunmehr die Steuerung der Busse dem Hauptmikroprozessor 10. Der Steuermikroprozessor 16 veranlaßt nun, daß die Daten-und Adressenpufferspeicher 34, 36, 38, 40 und 42 in den Tristatezustand geschaltet werden. Er veranlaßt weiter, daß der Hauptmikroprozessor 10 den Wartezustand verläßt und geht selbst in den Wartezustand über. Der Steuermikroprozessor 16 schaltet sich also aus dem Schaltkreis aus, nachdem er seine Aufgabe erfolgreich erledigt hat.

Der Hauptmikroprozessor 10 beginnt nun seinen Selbsttest. Die Befehle für den Selbsttest sind im Hauptspeicher 14 enthalten. Diese Befehle bestehen am Anfang aus einfachen Instruktionen zur Prüfung der Datenverarbeitungsfähigkeit des Prozessors 10. Wenn ein Fehler festgestellt wird, dann wird durch die Anzeigeeinheit eine "1" angezeigt. Wenn kein Fehler vorliegt, wird der volle Befehlsvorrat ausgeführt, der auch eine Prüfung des Direktzugriffsspeichers (nicht dargestellt) des Hauptmikroprozessors 10 enthält. Tritt ein Fehler auf, dann wird an der Anzeigeeinheit das Zeichen "6" ausgegeben und der Testvorgang beendet.

Nach Beendigung des Prüfvorgangs und bei Fehlerfreiheit beginnt der Hauptmikroprozessor 10 mit der Ausführung der im Hauptspeicher 14 enthaltenen Nutzbefehle und erfüllt damit die Aufgaben, für die er gedacht ist.

13 Patentansprüche
5 Figuren

Patentansprüche

1. Eingebaute Anordnung zum Prüfen eines Mikroprozessorsystems, das einen Hauptmikroprozessor und einem diesem
zugeordneten Hauptspeicher enthält,    g e k e n n   -
z e i c h n e t   durch folgende Merkmale:
a) es ist ein Steuermikroprozessor (16) mit einem Speicher
   vorgesehen,
b) es ist eine Anzeigeeinheit (18) vorgesehen, durch die
   die Feststellung und die Art der Fehler innerhalb des
   Hauptmikroprozessors (10), des Hauptspeichers (14) und
   der Prüfanordnung angezeigt wird,
c) es ist eine Schnittstellenschaltung zur Herstellung
   einer Verbindung zwischen dem Steuermikroprozessor (16)
   und den zu prüfenden Schaltkreisen vorgesehen, so daß
   der Steuermikroprozessor (16) die Übertragung von Testfolgen zu den übrigen Teilen der Prüfanordnung, zu dem
   Hauptmikroprozessor (10) und zu dem Hauptspeicher (14)
   zu deren Überprüfung veranlassen kann.

2. Prüfanordnung nach Anspruch 1, dadurch   g e k e n n   -
z e i c h n e t   , daß die Schnittstellenschaltung einen
Rücksetzschalter (50) enthält, der die Prüfanordnung startet, so daß diese mit der Ausführung der Testfolgen beginnt.

3. Prüfanordnung nach Anspruch 1 oder 2, dadurch   g e   -
k e n n z e i c h n e t   , daß der Steuermikroprozessor
(16) als integrierter Baustein realisiert ist.

4. Prüfanordnung nach einem der vorhergehenden Ansprüche,
dadurch   g e k e n n z e i c h n e t   , daß der Hauptmikroprozessor (10) ein 16-bit Mikroprozessor und der
Steuermikroprozessor (16) ein 8-bit Mikroprozessor ist.

5: Verfahren zur Überprüfung eines Mikroprozessorsystems,
das einen Hauptmikroprozessor (10) und einen zugeordneten
Hauptspeicher (14) enthält, mit Hilfe einer Prüfanordnung,
die zumindest einen Steuermikroprozessor (16), eine Anzeigeeinheit (18) und eine Schnittstellenschaltung enthält,
dadurch  g e k e n n z e i c h n e t  , daß der Steuermikroprozessor (16) zunächst einen Selbsttest durchführt,
daß dann die Schnittstellenschaltung, die Anzeigeeinheit
(18) und der Hauptspeicher (14) dadurch überprüft wird,
daß ihnen Testfolgen gesteuert vom Steuermikroprozessor (16)
zugeführt werden, und daß schließlich der Hauptmikroprozessor (10) einen Selbsttest durchführt und dabei ein Prüfprogramm ausführt, das im Hauptspeicher (14) gespeichert
ist.

6. Verfahren zum Prüfen eines Mikroprozessorsystems, das
einen Hauptmikroprozessor (10) und einen zugeordneten
Hauptspeicher (14) enthält, mit Hilfe einer eingebauten
Prüfanordnung,  g e k e n n z e i c h n e t  durch folgende Schritte:

a) ein Steuermikroprozessor (16) gibt einen Testbefehl ab,
   der die Trennung des Hauptmikroprozessors (10) vom
   Hauptspeicher (14) veranlaßt,

b) der Steuermikroprozessor (16) führt einen Selbsttest
   durch,

c) der Steuermikroprozessor (16) gibt Testbefehle zur Überprüfung einer Anzeigeeinheit (18) und eines Signaturregisters (20) ab,

d) der Hauptspeicher (14) wird mit Hilfe des Signaturregisters unter der Steuerung des Steuermikroprozessors
   (16) überprüft,

e) die Anzeigeeinheit (18) zeigt die Testergebnisse an,

f) der Hauptmikroprozessor (10) erhält wieder Zugriff zu
   dem Hauptspeicher (14),

g) der Steuermikroprozessor (16) veranlaßt den Hauptmikroprozessor (10) dazu, die Ausführung des Selbsttestes zu beginnen.

7. Verfahren nach Anspruch 6, dadurch  g e k e n n -
z e i c h n e t  , daß der Steuermikroprozessor (16) die
Selbstprüfung mit folgenden Schritten ausführt:

a) der Steuermikroprozessor (16) führt Testbefehle zur Überprüfung seiner arithmetischen Funktionen aus,

b) das Ergebnis dieser Verarbeitung wird mit einem bekannten Ergebnis verglichen,

c) die Anzeigeeinheit (18) gibt an, wenn Ungleichheit zwischen dem Verarbeitungsergebnis des Steuermikroprozessors und
   dem bekannten Ergebnis besteht.

8. Verfahren nach Anspruch 6 oder 7, dadurch  g e k e n n -
z e i c h n e t  , daß die Anzeigeeinheit (18) zumindest
eine digitale Ziffernanzeige zur Darstellung von hexadezimalen Zeichen aufweist, und daß zur Überprüfung der Anzeigeeinheit schrittweise nacheinander          alle 16 Zeichen des hexadezimalen Zahlensystems angezeigt werden, so daß ein
Operator die fehlerfreie Funktion der Anzeigeeinheit feststellen kann.

9. Verfahren nach Anspruch 7 oder 8, dadurch  g e k e n n -
z e i c h n e t  , daß zur Prüfung des Hauptspeichers (14)
folgende Schritte ausgeführt werden:

a) das Signaturregister (20) wird mit bekannten Daten geladen,

b) nacheinander werden die Inhalte des Hauptspeichers (14)
   dem Signaturregister (20) zugeführt, um daraus Datensignaturen zu erzeugen,

c) die Datensignatur wird mit einer bekannten und richtigen
   Datensignatur verglichen,

d) die Anzeigeeinheit (18) setzt eine Anzeige, wenn eine
   Ungleichheit zwischen der Datensignatur des Signaturregisters (20) und der bekannten richtigen Datensignatur
   besteht.

10. Verfahren nach Anspruch 9, dadurch  g e k e n n  - z e i c h n e t  , daß die bekannte und richtige Datensignatur im Hauptspeicher (14) gespeichert ist.

11. Verfahren nach Anspruch 9, dadurch  g e k e n n  - z e i c h n e t  , daß der Hauptspeicher (14) pro Speicherstelle mehr Bit speichert als es der Breite des Steuermikroprozessors (16) entspricht und daß beim Prüfvorgang nacheinander die Inhalte des Hauptspeichers dadurch in das Signaturregister übertragen werden, daß nur ein Teil der Inhalte jeder Speicherstelle Schritt für Schritt zum Signaturregister übertragen wird, bis der gesamte Inhalt aller Speicherstellen übertragen ist.

12. Verfahren nach einem der Ansprüche 6 bis 11, dadurch  g e k e n n z e i c h n e t  , daß zur Prüfung des Signaturregisters (20) folgende Schritte durchgeführt werden:
    a) das Signaturregister (20) wird mit einem vorgegebenen Datenmuster geladen,
    b) es wird ein Datenmuster in das Signaturregister (20) eingegeben, um das vorgegebene  Datenmuster in ein Da- tensignaturwort entsprechend einem vorgegebenen Algo- rithmus zu verändern,
    c) dieses Signaturwort wird mit einem bekannten richtigen Signaturwort verglichen,
    d) die Anzeigeeinheit (18) gibt an, wenn die beiden Signaturen nicht übereinstimmen.

13. Verfahren nach einem der Ansprüche 6 bis 12, dadurch  g e k e n n z e i c h n e t  , daß zur Überprüfung des Hauptmikroprozessors (10) folgende Schritte ausgeführt werden:
    a) der Hauptmikroprozessor (10) führt eine Mehrzahl von Mikroprozessorbefehlen aus,
    b) die Ergebnisse dieser Verarbeitung werden gespeichert,

c) die Ergebnisse der Verarbeitung werden mit bekannten Verarbeitungsergebnissen verglichen,

d) die Anzeigeeinheit (18) gibt an, wenn der Vergleich ein falsches Verarbeitungsergebnis feststellt.

FIG. 1

FIG. 2

3/5   0135009

FIG. 3

CONNECTED TO SR INPUT BUFFER

SIGNATURE REGISTER BLOCK DIAGRAM

FIG. 4

OVERALL FLOW CHART

FIG. 5